# FASCICULE DE BREVET EUROPEEN

(11) **EP 1 644 211 B1**
(45) Date de publication et mention de la délivrance du brevet: **31.01.2007**
(21) Numéro de dépôt: 04767705.9
(22) Date de dépôt: 16.07.2004
(51) Int. Cl.: B60J 7/02, B60J 7/047

(54) **VEHICULE A MODULE DE TOIT OUVRANT INTEGRE**
FAHRZEUG MIT INTEGRIERTEM SCHIEBEDACHMODUL
VEHICLE WITH INTEGRATED SLIDING ROOF MODULE

(30) Priorité: 16.07.2003 FR 0308695; 04.08.2003 FR 0309605
(43) Date de publication de la demande: 12.04.2006
(73) Titulaire: Société Européenne de Brevets Automobiles - SEBA, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2004/001881
(87) Numéro de publication internationale: WO 2005/007433

(56) Documents cités:
- EP-A- 1 228 913
- EP-A- 1 331 120
- WO-A-03/084773
- DE-A1- 3 816 060
- DE-C1- 10 159 390
- DE-U1- 20 204 110
- US-A1- 2001 045 759
- US-A1- 2003 020 299

## Description

La présente invention concerne un toit escamotable de véhicule selon le préambule de la revendication 1, et plus particulièrement un tel toit comprenant plusieurs éléments (ou parties) de toit rigides déplaçable entre une position dans laquelle ils recouvrent l'habitacle du véhicule et un position dans laquelle ils sont rangés dans le coffre arrière du véhicule comme montré dans le document DE 3816060.

On connaît de tels toits escamotables permettant de transformer un véhicule du type berline ou coupé en un véhicule du type cabriolet.

Un exemple est décrit dans FR-B-2 694 245. Le document EP 1331120, compris dans l'état de la technique selon l'Article 54(3), montre un autre système de toit escamotable avec les longerons latéraux fixes.

Un problème rencontré avec les toits rétractables qui s'escamotent dans un espace de rangement à l'intérieur de la carrosserie concerne leur mise en place dans ce véhicule. Les constructeurs automobiles et leurs sous-traitants sont ainsi en particulier confrontés à des difficultés de gestion et d'ergonomie des chaînes d'assemblage, d'approvisionnement en pièces et de difficulté et temps de montage.

Un objet de l'invention est d'apporter une solution à ce problème. La solution à ce problème est décrite dans la partie caractérisante de la revendication 1.

De préférence, un tel véhicule conforme à l'invention sera tel que sa structure et le bâti support de l'ensemble modulaire de toit comprendront l'un deux berceaux alignés perpendiculairement à l'axe longitudinal du véhicule et l'autre deux tourillons adaptés pour être reçus dans lesdits berceaux, pour autoriser un pivotement dudit ensemble modulaire de toit par rapport à la structure du véhicule, alors que les parties de toit sont en positions repliées.

Outre les avantages de montage et de gestion des chaînes déjà cités, on pourra ainsi gagner en volume de rangement/chargement dans le volume arrière (coffre) du véhicule.

D'ailleurs, en relation avec cela, on conseille par ailleurs :
- que lesdits sièges du véhicule soient montés sur la structure pour être basculables vers l'avant, et
- que le véhicule comprenne en outre des moyens d'actionnement de l'ensemble modulaire de toit, ces moyens d'actionnement comprenant une commande accessible à l'utilisateur du véhicule pour basculer l'ensemble modulaire de toit entre ladite position repliée des parties de toit, alors que ceux-ci sont disposés les uns à côté des autres, de préférence sensiblement verticalement, derrière lesdits sièges, et une position basculée vers l'avant, dans l'habitacle, alors que lesdits sièges ont été eux-mêmes basculés vers l'avant.

Encore dans une recherche de volume de rangement accru et de compacité du module de toit (favorable à son montage, voire à une intervention ultérieure sur lui), il est en outre prévu qu'avantageusement :
- le bâti support et le mécanisme de mouvement des parties de toit définissent deux blocs latéraux et s'étendent ainsi essentiellement latéralement ainsi qu'a proximité immédiate des parties de toit en position repliée, pour dégager entre lesdits blocs latéraux un espace disponible,
- la zone de rangement de toit communique avec le coffre arrière du véhicule,
- et le véhicule comprend en outre des moyens d'arrêt pour arrêter l'ensemble modulaire du toit en position sensiblement horizontale des parties de toit, alors superposées les unes par rapport aux autres, ces parties de toit dégageant alors sous elles un espace de rangement supplémentaire disponible.

On désolidarise ainsi les éléments de toit centraux des éléments de toit latéraux qui restent solidaires et fixes au châssis. Dans un mode de réalisation particulier, l'élément de toit central avant est monté sur une glissière engagée dans une deuxième glissière elle même engagée dans une troisième glissière portée par l'élément de toit intermédiaire.

On décrira maintenant, à titre d'exemple non limitatif, un mode de réalisation particulier de l'invention en référence aux dessins schématiques dans lesquels :
- la figure 1 montre le module de toit replié, prêt à être monté dans un véhicule, tel que celui illustré à plus petite échelle figure 2,
- les figures 3 et 4 montrent le toit escamotable dans différentes positions, la figure 4 montrant le module de toit replié, basculé vers l'avant pour dégager un volume supplémentaire de rangement dans le coffre,
- la figure 5 montre partiellement en perspective (avec une vue traversante) et en position fermée, les deux panneaux de toit ici prévus,
- la figure 6 montre une commande possible des glissières de panneaux de toit, et
- la figure 7 est la coupe VII-VII de la figure 5.

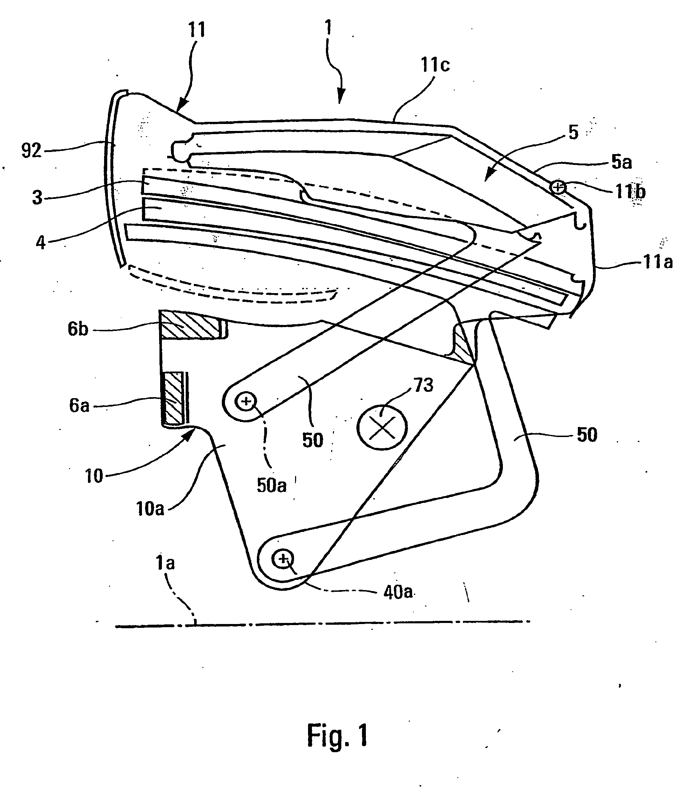

On voit à la figure 1 un module 1 de toit, en position repliée. Ce module tel que représenté comprend un bâti support 10 pourvu de deux platines parallèles (ou blocs latéraux), dont l'une seulement apparaît (repère 10a), reliées l'une à l'autre par des poutres, telles que 6a,6b transversales à l'axe, longitudinal la du véhicule. Sur ces platines est articulé en rotation, selon un axe 40a transversal à l'axe longitudinal la du véhicule, un premier bras 40 qui supporte et articule des éléments de toit centraux 3,4. Un deuxième bras 50 est également articulé sur ces platines selon un deuxième axe 50a transversal à l'axe longitudinal du véhicule. Ce deuxième bras supporte et articule l'élément de toit arrière 5.

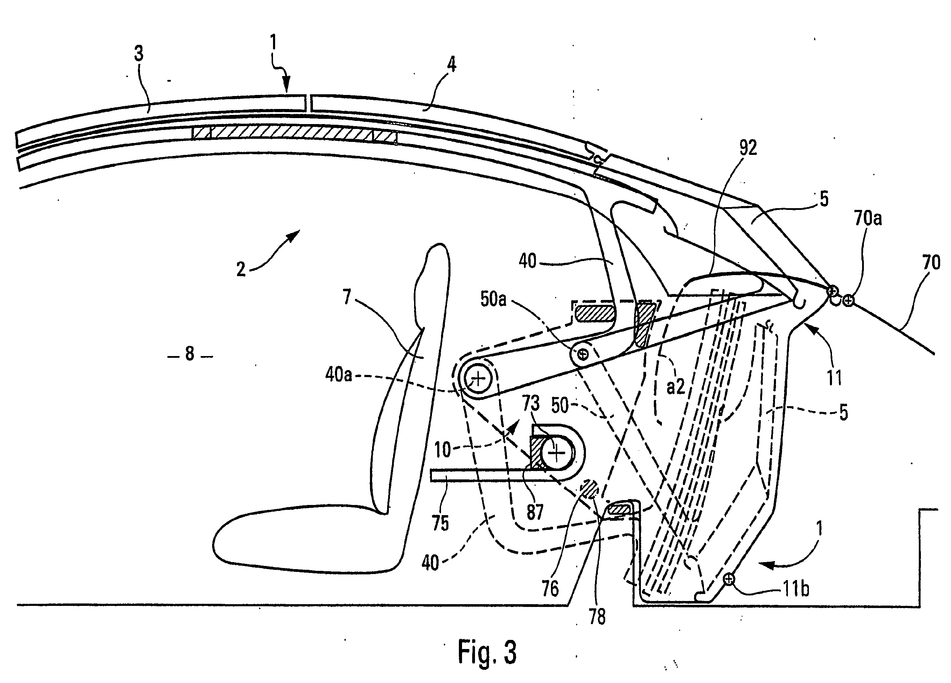

Ainsi, comme montré en particulier figures 2 et 3, le module de toit 1 comprend ici deux panneaux rigides, sensiblement plats 3,4 (montés a priori glissants l'un par rapport à l'autre, sensiblement suivant la par des moyens coulissants), et un élément de toit arrière 5 comprenant la lunette arrière 5a du véhicule.

L'ensemble de ces éléments de toit est escamotable derrière les sièges arrière 7 situés le plus à l'arrière de l'habitacle 8, dans un espace de rangement 9, communiquant avec le coffre du véhicule, que ce coffre soit ou non saillant (comme sur la figure 2) . Le capot 70 du coffre peut ne s'articuler qu'à l'avant (en 70a) sur la structure 72 du véhicule, pour ne basculer alors que de l'arrière vers l'avant lorsqu'il s'ouvre.

Dans l'espace 9, les éléments 3,4,5 sont rangés dans un coffrage, ou une enveloppe, 11 de rangement solidaire du bâti 10, (en particulier des deux platines 2).

Sur chaque platine s'étend, dans le sens transversal du véhicule, deux tourillons dont l'un (73) apparaît figures 1,3,4.

Un tel ensemble de toit, avec ses éléments de toit, son bâti 10, ses articulations et son enveloppe de rangement 11 compose un module de toit qui peut être installé directement dans un véhicule qui aurait été au préalable préparé à recevoir donc d'une seule pièce un tel module.

Pour cela, la structure 72 du véhicule et le bâti support 10 comprennent l'un deux berceaux 75 (seul l'un est montré figs. 1,3,4) alignés perpendiculairement à l'axe longitudinal du véhicule et l'autre les deux tourillons 73 adaptés pour être reçus dans lesdits berceaux, pour autoriser un pivotement de l'ensemble modulaire de toit 1 par rapport à la structure du véhicule, alors que les parties de toit sont en position repliée (figs. 1,3,4).

D'autres éléments repères de réception et de verrouillage sont prévus pour partie sur la structure 72 et pour partie sur le bâti 10 (montants latéraux 10a), tels que des pions latéraux mobiles commandés pour s'engager ou sortir d'orifices coopérants 78 (fig. 3).

Afin de positionner ce module dans le véhicule, celui-ci est introduit par l'arrière du véhicule ou par le haut, à travers alors l'ouverture centrale 77 que présente longitudinalement le pavillon 79 pour recevoir les éléments de toit 3,4,5, entre les deux barreaux ou longerons latéraux 81,83. Comme on le voit fig. 2,4 et 5, ces longerons de toit sont fixes par rapport à la structure 72 et s'étendent ici entre le pare-brise 85 et les bords latéraux du coffre.

L'habillage intérieur du véhicule (sièges, tableau de bord...) est mis en place ultérieurement.

Toit monté, chaque tourillon 73 se positionne et se cale dans l'un des berceaux 75 où il est verrouillé par une cale 87, avec une liberté de rotation. Les berceaux 75 peuvent avoir une section en « U », ouverte vers l'avant et avec une branche supérieure 75a plus courte que la branche inférieure, ce qui facilite le montage.

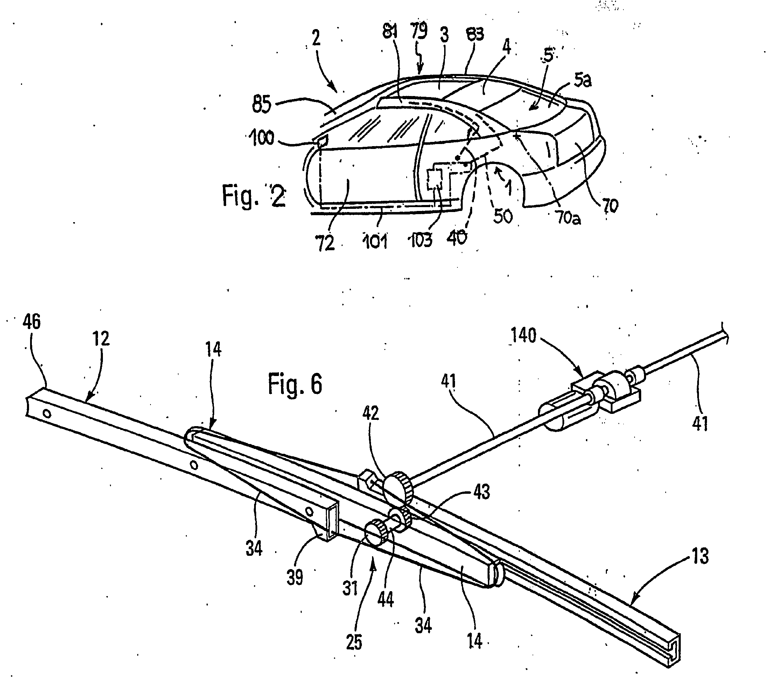

Une fois calé, le module est basculé sensiblement à la verticale (fig 3 en pointillés). A partir de cette position les éléments de toit peuvent être commandés en mouvement entre leur position fermée/déployée (au-dessus de l'habitacle, figs 3 et 5) e,t leur position rangée (figs 3 en pointillés et 4).

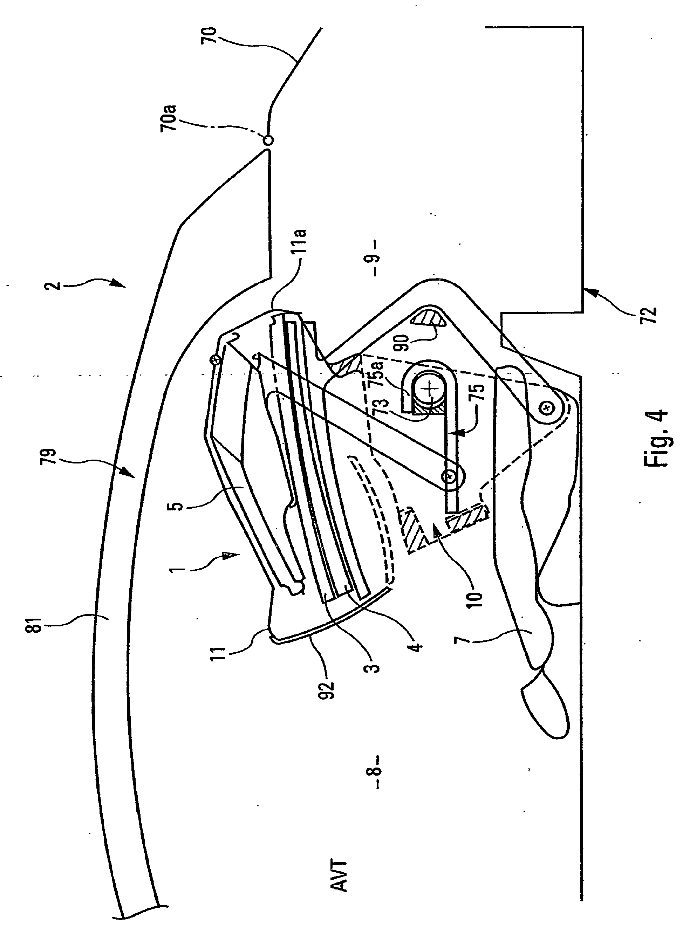

Un intérêt de l'invention est en outre dans le basculement du module 1, vers l'avant, dans l'habitacle 8, lorsque les éléments de toit sont rangés dans leur position sensiblement verticale, comme le montre la comparaison des figs. 3 et 4. Ainsi, on peut prévoir que le module puisse pivoter entre son état replié sensiblement vertical et un état, toujours replié, mais sensiblement horizontal, via les deux tourillons qui pivotent par rapport au châssis 72.

Si l'on s'intéresse maintenant à la liaison et au mouvement relatif entre les panneaux rigides 3 et 4 (si deux tels panneaux sont prévus), on note qu'il peut être en particulier prévu, voir fig. 5) que l'élément de toit avant 3 soit monté sur une première glissière 12. Cette première glissière est montée coulissante sur une deuxième glissière 14 elle-même coulissante sur une troisième glissière 13 à laquelle est liée fixement le panneau 4 (à moins qu'on ait prévu une mobilité relative panneau arrière 4/glissière 13 permettant de loger le panneau avant 3 sous le panneau arrière 4 en position ouverte /superposée des panneaux, à l'inverse donc de l'ordre d'empilement des figs. 1 et 4. Cette troisième glissière 13 est articulée au châssis (plus exactement au bâti 10 du module 1 fixé à la structure 72) par le bras d'articulation 40 qui la prolonge (voir fig.5) et qui entraîne, vers leur position rangée dans l'espace 9, et plus précisément dans l'enveloppe de rangement 11, les deux éléments 3,4 de toit superposés.

Les moyens de coulissement sensiblement suivant l'axe la entre les panneaux 3,4 peuvent être d'un type connu, comme par exemple décrit dans FR-A-2 797 226 (voir en particulier page 5 ligne 10 -page 6, ligne 23).

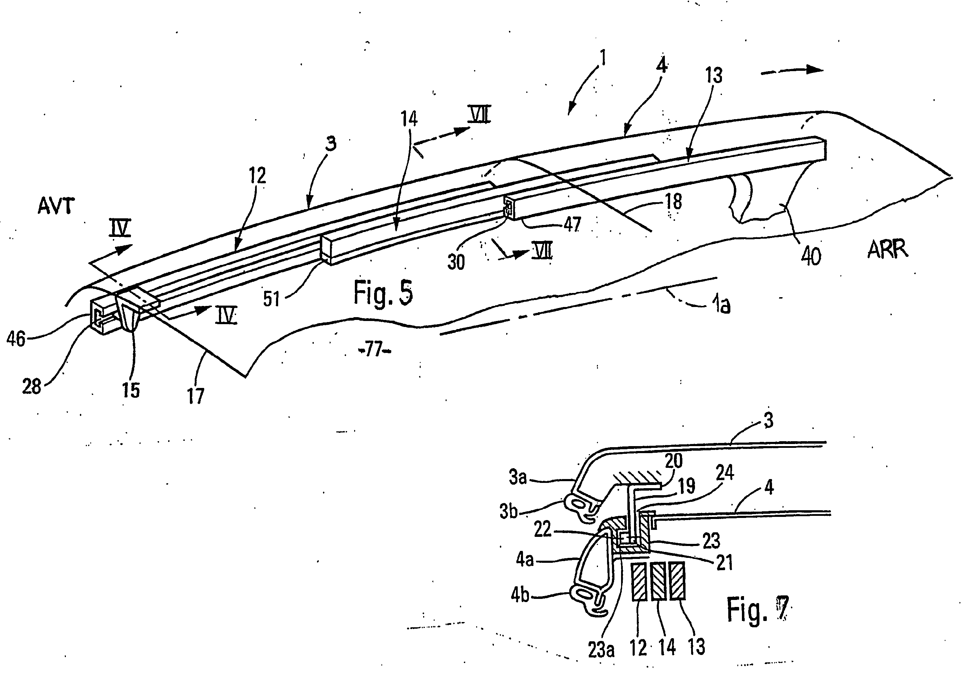

Comme à nouveau illustré figs.5,6 et 7, ces moyens à glissières peuvent être agencés de manière telle que le panneau avant 3 est mobile entre une position fermée, schématisée aux figures 3 et 5, dans laquelle il recouvre l'habitacle 79, et une position ouverte dans laquelle il est, après coulissement vers l'arrière, superposé au panneau central 4, comme schématisé Fig. 7 et figure 3 en pointillés.

Comme montré fig.7, à l'extrémité arrière 18 du panneau avant 3 est fixée l'extrémité supérieure 20 d'une patte 19 portant, à son extrémité inférieure 21, un axe 22 reçu de manière coulissante dans une gorge 23a d'une glissière de guidage 23 portée par le panneau central 4 et ouverte vers le haut par une rainure 24 pour le passage de la patte 19. La glissière 23 est fixée au panneau 4.

Des moyens d'entraînement 25 sont prévus pour faire coulisser, de préférence en même temps et à la même vitesse relative, la glissière avant 12 par rapport à la glissière intermédiaire 14, d'une part, et la glissière intermédiaire 14 par rapport à la glissière arrière 13, d'autre part.

Bien entendu, ce qui vaut pour ce côté droit du véhicule, vaut, par symétrie pour la gauche.
Les glissières avant 12,13,14 s'étendent, ensemble, entre l'avant et l'arrière des panneaux 3,4 (fig. 5). Dans cet exemple, la glissière intermédiaire 14 porte, du côté extérieur, deux galets 27 situés dans sa moitié avant et adaptés à rouler dans une gorge 28 de la glissière avant 12.
De même, la glissière intermédiaire 14 porte, du côté vers l'intérieur du véhicule, deux galets 29 situés dans sa moitié arrière et adaptés à rouler dans une gorge 30 de la glissière arrière 13.
Chaque panneau 3, 4 comprend les renforts latéraux 3a, 4a et les joints 3b, 4b correspondants glissant étroitement le long des longerons latéraux de toit 81,83.
Les trois glissières 12 à 14 sont situées du côté intérieur du renfort latéral 4a correspondant, sensiblement sous la glissière de guidage 23 correspondante.
Dans le mode de réalisation schématisé figure 6, les moyens d'entraînement 25 comprennent un pignon moteur 31 entraînant une crémaillère 32 portée par la glissière 14.
Les moyens d'entraînement 25 comprennent également de préférence, porté par la glissière intermédiaire 14, un câble sans fin 34 s'enroulant entre deux patins 35, 36 fixés aux deux extrémités longitudinales de la glissière intermédiaire 14, et dont deux points sont fixés, l'un, 37, à l'avant du panneau central 4, l'autre, 39, à l'extrémité arrière 18 du panneau avant 3.
Dans l'exemple, un moteur 140 entraîne deux demi-arbres 41 portant chacun un premier pignon 42 en prise avec un second pignon 43 fixé sur un axe 44 entraînant le pignon moteur 31 en prise avec la crémaillère 32.
Lorsque le moteur 140 tourne, dans le sens de l'ouverture du toit à partir de sa position fermée de la figure 5, le pignon 31 entraîne vers l'arrière (ARR) la crémaillère 32 et la glissière 14. Le câble 34 tourne autour des patins 35, 36 et entraîne vers l'arrière le panneau avant 3.
Les glissières 12, 13, 14 ont un profil circulaire de même rayon.
Pour le verrouillage du panneau central 4 à la structure 72 du véhicule 2, on se reportera p8 131 à p10 113 de FR-A-2 797 226.

La glissière de guidage 23 a, à son extrémité avant, une partie courbe s'étendant vers le haut et vers l'arrière du véhicule, avec une concavité tournée vers le bas, pour soulever l'arrière 18 du panneau avant 3 au-dessus de l'extrémité avant 38 du panneau central 4 dès le début du coulissement vers arrière du panneau avant 3.

Pour des détails concernant cet aspect, on se reportera p10 122 à p12 117.

Une fois les panneaux de toit 3,4 en position ouverte, superposés sensiblement horizontalement comme sur la figure 7, en position haute du toit, le rangement du toit dans l'espace 9 peut être réalisé, si on le souhaite.

Pour cela l'utilisateur va déclencher volontairement une commande qui va tout d'abord provoquer une inclinaison légèrement vers l'arrière de l'élément arrière de toit 5, avec soulèvement de son bord avant, permettant ainsi de passer dessous les panneaux de toit superposés 3, 4.

Ces panneaux de toit vont alors basculer autour de l'axe 40a, entraînés par les deux bras latéraux 40 liés donc chacun fixement à la glissière arrière 13.

Ensuite, et a priori dans un mouvement complémentaire, l'élément arrière de toit 5 va basculer complètement vers l'arrière sous la commande de ses bras latéraux 50, eux aussi fixés à cet élément de toit.

L'ensemble atteint ainsi sa position de rangement dans l'espace 9, avec une disposition sensiblement verticale des éléments 3,4,5 alors disposés côte à côte comme montré en pointillé sur la figure 3.

Eventuellement, on aurait pu prévoir une articulation relative entre les bras 40, 50 et les éléments de toit auxquels ils sont reliés. Mais ceci n'est pas indispensable ici.

Etant donné que la zone de rangement 9 communique avec le coffre arrière du véhicule que ferme le capot 70, on conserve ainsi à l'arrière un volume de rangement utile.

Comme illustré, par comparaison, aux figures 3 et 4, il est également envisagé dans l'invention de prévoir un basculement du module de toit 1 de sa position repliée, sensiblement verticale de la figure 3 vers une position basculée vers l'avant (AVT), comme sur la figure 4, après basculement vers l'avant des sièges 7.

Ce ne sont alors pas les bras 40,50 qui pivotent, mais tout le module de toit 1, autour des tourillons 73, jusqu'à amener le module dans la position sensiblement horizontale de ses éléments de toit 3,4 et 5 alors superposés.

Ce basculement du module 1 est avantageusement commandé à partir du tableau de bord du véhicule, avec une commande 100 (fig. 2) qui, par un fil 101 relié aux pions 76, verrouille ou déverrouille le module et commande son basculement par l'intermédiaire d'un moteur 103 ou de vérins, si nécessaire.

Des moyens d'arrêt pouvant être constitués par une ou plusieurs butées 90 fixées à la structure 72 du véhicule permettent d'arrêter l'ensemble modulaire dans cette position basculée vers l'avant, au dessus des sièges 7 basculés, libérant ainsi derrière le module 1, et a priori entre l'enveloppe 11 et ces sièges, un espace de rangement supplémentaire disponible.

Comme on l'aura noté, le rangement des éléments de toit 3,4,5 s'effectue avantageusement à l'intérieur d'une enveloppe de réception 11 qui constituera une sorte de boîtier d'habillage et de protection.

Cette enveloppe 11 est liée fixement au bâti 10 du module et peut tout d'abord comprendre un fond 11a fixé au bâti.

En partie basse (lorsque les éléments 3,4,5 sont en position rangée sensiblement verticale comme sur la figure 3), l'enveloppe 11 peut présenter un axe d'articulation transversal 11b (voir également figure 1) pour le pivotement d'un volet supérieur 11c permettant d'accéder à l'intérieur de l'enveloppe.

A l'opposé du fond 11a, se trouve la tablette arrière 92 qui s'étend en position sensiblement horizontale au dessus des éléments de toit 3,4,5 rangés verticalement, dans leur position pointillée de la figure 3 .

La tablette 92 peut être prévue pour pivoter en même temps que l'enveloppe 11, lorsqu'elle passe, avec tout le module, dans sa position de la figure 4.

La tablette 92 est en outre mobile par rapport tant à l'enveloppe 11 (si elle est liée à elle) que par rapport à la structure 72 du véhicule, pour s'escamoter en position inclinée en dégageant le passage pour les éléments de toit, lorsqu'ils doivent passer à son niveau, pour être repliés ou déployés.

Ainsi, sur la figure 3, on peut noter la position en pointillée, sensiblement verticale, basculée vers l'avant, de la tablette 92, position que cette tablette occupe dans cet exemple lors des mouvements du toit.

En position horizontale, la tablette 92 peut en particulier fermer l'extrémité supérieure de l'enveloppe 11.

Dans ce qui précède, on a enseigné le cas d'un élément arrière de toit 5 porteur d'une lunette arrière 5a et monté mobile par rapport à la structure du véhicule.

Le principe de l'invention est toutefois applicable à d'autres types de solutions, telle qu'une solution avec un élément arrière 5 fixe, voire des panneaux avant non escamotables dans l'espace de rangement et qui seraient alors uniquement inclinables / coulissants, en haut du toit.

## Revendications

1. Véhicule présentant un avant, un arrière et un axe longitudinal (1a), et comprenant :
- un habitacle (8) avec des sièges (7) situés à l'arrière de l'habitacle,
- une structure (72) de véhicule par rapport à laquelle sont mobiles au moins deux parties rigides (3,4,5) d'un toit rétractable, respectivement une première partie avant (3,4) et une seconde partie arrière (5), ces parties rigides de toit étant mobiles entre une position déployée atteinte par déplacement vers l'avant et dans laquelle elles recouvrent l'habitacle et sont sensiblement alignées les unes derrière les autres, et une position repliée atteinte par déplacement vers l'arrière du véhicule et dans laquelle lesdites parties sont décalées les unes par rapport aux autres et escamotées dans un espace de rangement (9) situé derrière les sièges (7),
- et un ensemble modulaire de toit (1) rapporté d'une seule pièce sur la structure du véhicule, cet ensemble comprenant :
* le toit rétractable, avec ses parties rigides mobiles (3,4,5),
* un bâti (10) support du toit rétractable lié à la structure (72) du véhicule,
* et un mécanisme (12,13,40,50) de mouvement des parties de toit, lié à ces dernières et porté par le bâti-support (10) pour, une fois l'ensemble modulaire de toit positionné à l'intérieur du véhicule, déplacer lesdites parties de toit par rapport à l'ouverture du toit entre leurs positions déployée et repliée,
**caractérisé en ce que** :
- ledit ensemble modulaire de toit (1) est reçu dans le véhicule par l'intermédiaire d'éléments repères de réception et de verrouillage (76,78,73,75) prévus pour partie sur la structure (72) du véhicule et pour partie sur le bâti-support (10), de sorte que le bâti-support (10) est positionné en vis-à-vis des éléments repères de la structure du véhicule, et
- cette structure (72) de véhicule définit localement un pavillon (79) qui présente ladite ouverture (77) obturable par le toit rétractable, cette structure étant adaptée à recevoir latéralement, le long de deux longerons latéraux fixes (81,83) qu'elle comprend le long de cette ouverture, un coulissement étanche desdites parties de toit.

2. Véhicule selon la revendication 1 **caractérisé en ce qu'**en position repliée, lesdites parties (3,4,5) de toit occupe une position sensiblement verticale, les unes à côtés des autres.

3. Véhicule selon la revendication 1 ou 2, **caractérisé en ce que** les éléments repères de réception et de verrouillage prévus sur la structure (72) du véhicule et le bâti-support de l'ensemble modulaire de toit comprennent, l'un, deux berceaux (75) alignés perpendiculairement à l'axe (1a) longitudinal du véhicule et, l'autre, deux tourillons (73) adaptés pour être reçus dans lesdits berceaux, de manière à autoriser un pivotement dudit ensemble modulaire de toit (1) par rapport à la structure (72) du véhicule.

4. Véhicule selon la revendication 3, **caractérisé en ce que** :
- les sièges (7) du véhicule sont montés sur la structure pour être basculables vers l'avant, et
- le véhicule comprend outre des moyens (100, 101, 103) d'actionnement de l'ensemble modulaire de toit, ces moyens d'actionnement comprenant une commande (100) pour faire basculer cet ensemble modulaire de toit (1) entre ladite position repliée des parties de toit, alors que celles-ci sont disposées les unes à côté des autres, sensiblement verticalement, derrière lesdits sièges, et une position basculée vers l'avant, dans l'habitacle, alors que les sièges ont déjà été basculés vers l'avant.

5. Véhicule selon l'une des revendications précédentes, **caractérisé en ce que** :
- le bâti support (10,10a) et le mécanisme (12,13,40,50) de déplacement des parties de toit définissent deux blocs situés latéralement de part et d'autre dudit axe longitudinal (1a) du véhicule, de manière à dégager entre ces blocs un espace disponible,
- la zone (9) de rangement de toit communique avec un coffre arrière de rangement de bagages que présente le véhicule,
- et le véhicule comprend en outre des moyens d'arrêt (90) pour arrêter l'ensemble modulaire de.toit en position sensiblement horizontale des parties de toit, alors superposées les unes au-dessus des autres, ces parties de toit dégageant alors sous elles un espace de rangement supplémentaire disponible.

6. Véhicule selon l'une quelconque des revendications précédentes, **caractérisé en ce que** :
- le toit comprend trois parties rigides (3,4,5), dont une troisième partie rigide (3) disposée encore en avant de ladite première partie avant (4), en position déployée,
- la seconde partie arrière de toit (5) comprend une lunette arrière (5a), et
- le mécanisme de déplacement de ces parties de toit comprend des bras pivotants (40,50) articulés d'un côté par rapport au bâti-support (10) en deux endroits différents et liés d'un autre côté, pour l'un d'entre eux, à ladite seconde partie (5) arrière de toit, et pour un autre/l'autre, à la première partie de toit avant (4), ce dernier (40) étant lié à des glissières (12,13,14) pour un coulissement relatif entre les première partie avant (4) et troisième partie (3) de toit, entre les longerons latéraux fixes (81,83).

7. Véhicule selon l'une quelconque des revendications précédentes **caractérisé en ce qu'**une enveloppe (11) est fixée à l'ensemble modulaire de toit (1) et reçoit lesdites parties de toit (3,4,5) lorsqu'elles parviennent dans leur dite position repliée où elles sont disposées sensiblement verticalement.

8. Véhicule selon la revendication 7, **caractérisé en ce que** :
- le véhicule est équipé d'une tablette arrière (92) mobile entre une position sensiblement horizontale, lorsque lesdites parties de toit (3,4,5) sont dans leur position repliée, les unes à côtés des autres, et une position basculée vers l'avant, pendant le déploiement ou le repliement desdites parties de toit,
- et, dans sa position sensiblement horizontale, lorsque les parties de toit sont en position repliée à l'intérieur de ladite enveloppe (11) de réception, cette tablette arrière (92) ferme sensiblement la partie supérieure de l'enveloppe.

9. véhicule selon la revendication 7 ou 8, **caractérisé en ce qu'**à l'arrière, dans l'état replié des parties de toit, l'enveloppe (11) comprend un panneau mobile (11c) monté pivotant en partie basse vis-à-vis d'une partie fixe (11a) liée fixement au bâti-support (10).

10. Procédé pour équiper le véhicule selon l'une des revendications précédentes, le procédé comprenant les étapes de :
- fourniture de la structure (72) avec des bords latéraux d'un coffre et un encadrement de pare-brise, entre lesquels s'étendent lesdits longerons latéraux (81,83),
- fourniture de l'ensemble modulaire de toit,
- introduction de l'ensemble modulaire de toit à l'intérieur de la' structure du véhicule, par l'arrière, ou par le haut, à travers l'ouverture (77) du pavillon (79), entre les longerons latéraux (81,83),
- positionnement et verrouillage du bâti-support (10) en vis-à-vis des éléments repères de réception et de verrouillage (76,78,73,75) prévus sur ladite structure (72) du véhicule,
- puis mise en place d'un habillage intérieur du véhicule, avec les sièges (7).

11. Procédé d'équipement selon la revendication 10, **caractérisé en ce que** lors de l'introduction de l'ensemble modulaire de toit (1), lesdites parties (3,4,5) de toit sont dans leur position repliée.

## Claims

1. Vehicle having a front part, a rear part and a longitudinal axis (1a), and comprising:
- a passenger compartment (8) provided with seats (7) located at the rear of the passenger compartment;
- a vehicle structure (72), with respect to which at least two rigid parts (3, 4, 5) of a retractable roof are movable, respectively a first, front part (3, 4) and a second, rear part (5), said rigid roof parts being movable between an extended position reached by a forwards movement, and in which said parts cover the passenger compartment and are substantially in line one behind the others, and a folded position reached by a rearwards movement and in which said parts are offset from each other and retracted into a storage space (9) located behind the seats (7);
- and an add-on modular roof assembly (1) added as an integral part onto the vehicle structure, said assembly comprising:
* the retractable roof and its movable rigid parts (3, 4, 5) ;
* a retractable roof support body (10) connected to the vehicle structure (72);
- and a roof parts movement mechanism (12, 13, 40, 50) connected to said roof parts and supported on the support body (10) for moving the roof parts with respect to the roof opening, between their extended and folded positions, once the modular roof assembly is positioned inside the vehicle,
**characterized in that**:
- the modular roof assembly (1) is received inside the vehicle using guiding housing and locking elements (76, 78, 73, 75) provided in part on the vehicle structure (72) and in part on the support frame (10) such that the support frame (10) is positioned facing the guiding housing elements of the vehicle structure, and
- the vehicle structure (72) locally defines a roof panel (79) provided with said opening (77) closeable by means of the retractable roof, said structure being adapted to laterally receive a sealed sliding movement of the roof parts along two fixed, lateral members (81, 83) comprised in said structure along the opening.

2. Vehicle according to claim 1 **characterized in that** the roof parts (3, 4, 5) occupy a substantially vertical position, adjacent to each other, when in their folded position.

3. Vehicle according to claim 1 or 2, **characterized in that** one of the guiding housing and locking elements provided on the vehicle structure (72) and the support body of the modular roof assembly comprises two cradles (75) aligned perpendicular to the longitudinal axis (1a) of the vehicle, and the other of said guiding housing and locking elements and said support body comprises two trunnions (73) adapted to fit into the cradles, to enable pivoting of said modular roof assembly (1) with respect to the vehicle structure (72).

4. Vehicle according to claim 3 **characterized in that**:
- the seats (7) of the vehicle are installed on the structure so that they can be tilted forwards, and
- the vehicle further includes means (100, 101, 103) of actuating the modular roof assembly, said actuation means comprising a control (100) to tilt the modular roof assembly (1) between said folded position of the roof parts, when they are arranged adjacent to each other, substantially vertically behind the seats, and a position tilted forwards in the passenger compartment, when said seats are already tilted forwards;

5. Vehicle according to one of the previous claims,
**characterized in that**:
- the support body (10, 10a) and the movement mechanism (12, 13, 40, 50) for the roof parts define two blocks located laterally on each side of the longitudinal axis (1a) of the vehicle to clear an available space between said blocks;
- the roof storage area (9) communicates with a vehicle rear trunk for loading luggage;
- and the vehicle further comprises stop means (90) to stop the modular roof assembly in a substantially horizontal position of the roof parts, thus superposed with respect to each other, the roof parts then clearing an additional available storage space underneath.

6. Vehicle according to any one of the previous claims
**characterized in that**:
- the roof comprises three rigid parts (3, 4, 5) among which a third rigid part (3) is arranged in front of the first front part (4), in the extended position;
- the second roof rear part (5) comprises a rear window (5a), and
- the movement mechanism for these roof parts comprises pivoting arms (40), (50) which are, at one end, hinged with respect to the support body (10), at two different locations, and are connected, at an other end, for one of said arms to the second roof rear part (5) and, for the other, to the first roof front part (4), said other pivoting arm being connected to slides (12, 13, 14) for a relative sliding movement between the first front part (4) and the third part (3) of the roof, between the fixed lateral members(81, 83).

7. Vehicle according to any one of the previous claims, **characterized in that** a casing (11) is fixed to the modular roof assembly (1) and houses said roof parts (3, 4, 5) when they reach their said folded position in which they are arranged substantially vertically.

8. Vehicle according to claim 7 **characterized in that**:
- the vehicle is provided with a rear shelf (92) movable between a substantially horizontal position when said roof parts (3), (4), (5) are in their folded position, adjacent to each other, and a tilted forwards position, during extension or folding of said roof parts;
- said rear shelf (92) substantially closes the upper part of the casing when it is in its substantially horizontal position and the roof parts are in the folded position inside said housing casing (11).

9. Vehicle according to claim 7 or 8 **characterized in that** at the rear of the vehicle, when the roof parts are in the folded position, the casing (11) comprises a movable panel (11c) pivotally installed at its lower part about a fixed part (11a) fixedly connected to the support body (10).

10. Method for fitting equipment on a vehicle according to one of the previous claims, the method comprising the following steps of:
- supplying the structure (72) which comprises lateral edges of a trunk and a windshield frame, between which the lateral members (81, 83) extend;
- supplying the modular roof assembly;
- inserting the modular roof assembly inside the vehicle structure through the rear or the top of the vehicle, through the opening (77) in the roof panel (79) between the two lateral members 81, 83;
- positioning and locking the support body (10) facing the guiding housing and locking elements (76, 78, 73, 75) provided on the vehicle structure (72);
- then installing the vehicle internal trim and seats (7).

11. Method for fitting equipment according to claim 10, **characterized in that** when the modular roof assembly (1) is inserted inside the vehicle, the roof parts (3, 4, 5) are in their folded position.

## Patentansprüche

1. Fahrzeug mit einer Vorderseite, einem Heck und einer Längsachse (1a) umfassend:
- eine Fahrgastzelle (8) mit Sitzen, die hinten in der Fahrgastzelle angeordnet sind,
- eine Fahrzeugstruktur (72) zu der zumindest zwei starre Dachteile (3, 4, 5) eines einziehbaren Dachs relativ beweglich sind, jeweils ein erstes Vorderteil (3, 4) und ein zweites Rückteil (5), wobei die starren Dachteile zwischen einer entfalteten Position, die durch Verlagerung nach vorne erreicht wird und in der sie die Fahrgastzelle bedecken und sie hintereinander im wesentlichen aneinandergereiht sind, und eine zusammengefaltete Position beweglich sind, die durch Verlagerung in Richtung des Hecks des Fahrzeugs erreicht wird und in der die Teile gegeneinander verschoben und in einen Stauplatz (9) hinter den Sitzen (7) eingezogen sind,
- und eine modulare Dachanordnung (1), die als ein Stück auf die Fahrzeugstruktur angebracht ist, wobei die Dachanordnung umfaßt:
* das einziehbare Dach mit seinen beweglichen, starren Dachteilen (3, 4, 5),
* ein Tragegestell (10) des einziehbaren Dachs, das mit der Fahrzeugsstruktur (72) verbunden ist,
* und ein Mechanismus (12, 13, 40, 50) zum Bewegen von Dachteilen, der mit den letzteren verbunden ist und von dem Tragegestell (10) getragen ist, um, sobald die modulare Dachanordnung im Inneren des Fahrzeugs angeordnet ist, die Dachteile zum Öffnen des Dachs zwischen einer entfalteten und zusammengefalteten Position zu verlagern,
**dadurch gekennzeichnet, daß**:
- die modulare Dachanordnung (1) in dem Fahrzeug mittels eines Bezugsbauteils zur Aufnahme und eines Bezugsbauteils zur Verriegelung (76, 78, 73, 75) aufgenommen ist, welche Bezugsbauteile zum einem Teil auf der Fahrzeugstruktur (72) und zum anderen Teil auf dem Tragegestell (10) vorgesehen sind, so daß das Tragegestell (10) den Bezugsbauteilen der Fahrzeugstruktur gegenüberliegend positioniert ist, und
- die Fahrzeugstruktur (72) lokal ein Oberteil oder Deckteil (79) definiert, das die durch das einziehbare Dach verschließbare Öffnung (77) aufweist, wobei die Fahrzeugstruktur zum seitlichen Aufnehmen entlang von zwei seitlichen, ortsfesten Längsträgern (81, 83), die sie entlang der Öffnung aufweist, einer dichten Führung der Dachteile angepaßt ist.

2. Fahrzeug nach Anspruch 1, **dadurch gekennzeichnet, daß** in zusammengefalteter Position die Dachteile (3, 4, 5) nebeneinander eine im wesentlichen senkrechte Position einnehmen.

3. Fahrzeug nach einem der Ansprüche 1 oder 2, **dadurch gekennzeichnet, daß** von den auf der Fahrzeugstruktur (72) und dem Tragegestell der modularen Dachanordnung vorgesehenen Bezugsbauteil zur Aufnahme und Bezugsbauteil zur Verriegelung das eine zwei senkrecht zur Längsachse (1a) des Fahrzeugs ausgerichtete Lager (75) und das andere zwei zur Aufnahme in den Lagern angepaßte Lagerzapfen (73) umfaßt, um eine Drehung der modularen Dachanordnung (1) relativ zur Fahrzeugstruktur (72) zu ermöglichen.

4. Fahrzeug nach Anspruch 3, **dadurch gekennzeichnet, daß**:
- die Sitze (7) des Fahrzeugs auf die Fahrzeugstruktur nach vorne kippbar montiert sind, und
- das Fahrzeug zusätzlich Betätigungsmittel (100, 101, 103) für die modulare Dachanordnung umfaßt, wobei die Betätigungsmittel eine Steuerung (100) zum Kippen der modularen Dachanordnung (1) zwischen der zusammengefalteten Position der Dachteile, wenn diese nebeneinander, im wesentlichen senkrecht hinter den Sitzen angeordnet sind, und einer nach vorne in die Fahrgastzelle gekippten Position umfaßt, wenn die Sitze schon nach vorne gekippt sind.

5. Fahrzeug nach einem der vorangehenden Ansprüche, **dadurch gekennzeichnet, daß**:
- das Tragegestell (10, 10a) und der Mechanismus zum Verlagern (12, 13, 40, 50) von Dachteilen zwei beiderseits der Längsachse (1a) des Fahrzeugs lateral angeordnete Blöcke definieren, um zwischen den Blöcken einen verfügbaren Raum freizumachen,
- die Stauzone (9) des Dachs mit einem Heck-Kofferraum zum Stauen von Gepäck kommuniziert, den das Fahrzeug aufweist,
- und das Fahrzeug zusätzlich Stoppmittel (90) zum Stoppen der modularen Dachanordnung in im wesentlich horizontaler Position der Dachteile umfaßt, die nun übereinander angeordnet sind, wobei die Dachteile unter sich einen zusätzlich verfügbaren Stauraum freimachen.

6. Fahrzeug nach einem der vorangehenden Ansprüche, **dadurch gekennzeichnet, daß**:
- das Dach drei starre Dachteile (3, 4, 5) umfaßt, wobei das dritte starre Dachteil noch vor dem ersten Vorderteil (4) in entfalteter Position angeordnet ist,
- das zweite Rückteil des Dachs (5) ein Rückfenster (5a) umfaßt und
- der Mechanismus zum Verlagern von Dachteilen drehende Arme (40, 50) umfaßt, die auf der einen Seite zum Tragegestell (10) an zwei verschiedenen Orten gelenkig angebracht sind und auf der anderen Seite der eine der beiden mit dem zweiten Rückteil (5) des Dachs und ein/der andere mit dem ersten Vorderteil des Dachs (4) verbunden sind, wobei der letztere (40) mit Gleitschienen (12, 13, 14) zum relativen Gleiten zwischen dem ersten Vorderteil (4) und dem dritten Dachteil (3) des zwischen den ortsfesten, seitlichen Längsträgern (81, 83) verbunden ist.

7. Fahrzeug nach einem der vorangehenden Ansprüche, **dadurch gekennzeichnet, daß** eine Hülle (11) an der modularen Dachanordnung (1) angebracht ist und die Dachteile (3, 4, 5) aufnimmt, wenn sie in ihre zusammengefaltete Position kommen, wo sie im wesentlichen senkrecht angeordnet sind.

8. Fahrzeug nach Anspruch 7, **dadurch gekennzeichnet, daß**:
- das Fahrzeug mit einer zwischen einer im wesentlichen horizontalen Position, wenn die Dachteile (3, 4, 5) nebeneinander in ihrer zusammengefalteten Position sind, und einer während des Endfaltens oder Zusammenfaltens der Dachteile nach vorne gekippten Position beweglichen Rückablage (92) ausgestattet ist,
- und in ihrer im wesentlichen horizontalen Position, wenn die Dachteile in einer zusammengefalteten Position im Inneren der Hülle (11) zur Aufnahme sind, die Rückablage (92) im wesentlichen den oberen Teil der Hülle schließt.

9. Fahrzeug nach Anspruch 7 oder 8, **dadurch gekennzeichnet, daß** hinten, im zusammengefalteten Zustand der Dachteile die Hülle (11) eine bewegliche Platte (11c) umfaßt, die unten drehbar gegenüberliegend einem ortsfesten Teil (11a) montiert ist, der fest mit dem Tragegestell (10) verbunden ist.

10. Verfahren zum Ausstatten eines Fahrzeugs nach einem der vorangehenden Ansprüche, umfassend die folgenden Schritte:
- Bereitstellen der Fahrzeugstruktur (72) mit Seitenrändern eines Kofferraums und einem Windschutzscheibenrahmen, zwischen denen sich die seitlichen Längsträger (81, 83) erstrecken,
- Bereitstellen einer modularen Dachanordnung,
- Einführen der modularen Dachanordnung in das Innere der Fahrzeugsstruktur von hinten oder von oben durch die Öffnung (77) des Oberteils oder Deckteils (79) zwischen den seitlichen Längsträgern (81, 83),
- Anordnen und Verriegeln des Tragegestells (10) gegenüberliegend den in der Fahrzeugstruktur (72) vorgesehenen Bezugsbauteil zur Aufnahme und Bezugsbauteil zur Verriegelung (76, 78, 73, 75),
- Anschließendes Einsetzen der inneren Ausstattung des Fahrzeugs mit den Sitzen (7).

11. Verfahren zur Ausstattung nach Anspruch 10, **dadurch gekennzeichnet, daß** während des Einführens der modularen Dachanordnung (1) die Dachteile (3, 4, 5) in ihrer zusammengefalteten Position sind.
